# EUROPEAN PATENT APPLICATION

(11) **EP 1 288 591 A2**
(43) Date of publication of application: **05.03.2003**
(21) Application number: 02292142.3
(22) Date of filing: 30.08.2002
(51) Int. Cl.: F25B 13/00, F25B 27/00, F25B 30/06, F01N 3/36, F01N 5/02, F02G 5/04

(54) **Gas heat pump type air conditioning device, and combustion device for heating exhaust gas**

(30) Priority: 31.08.2001 JP 2001264908
(71) Applicant: Mitsubishi Heavy Industries, Ltd., Tokyo 100-8315 (JP)
(72) Inventor: KASAGI, Tsukasa Mitsubishi Heavy Ind., LTD., Nichi-kasugai-gun, Aichi-ken (JP); KUNITA, Hiraku Mitsubishi Heavy Ind., LTD, Nishi-kasugai-gun, Aichi-ken (JP); MORISHITA, Ryuji, Mitsubishi Heavy Ind., LTD., Nakamura-ku, Nagoya, Aichi-ken (JP); YAMAGISHI, Kazuo, Kanagawa-ken (JP)
(74) Representative: Intès, Didier Gérard André

(57) **Abstract**

In order to obtain more enhanced air heating capacity during low outdoor air temperature, a gas heat pump type air conditioning device which
circulates refrigerant by a compressing device (11) of which driving source is a gas engine, forms a refrigerating cycle, collects waste heat of exhaust gas exhausted from the gas engine to engine coolant water by an exhaust gas heat exchanging device (34), and heats the refrigerant by the engine coolant water to enhance the heating capacity, the exhaust gas exhausted from the gas engine is heated, and a heating device for increasing amount of thermal energy which can be collected in the exhaust gas heat exchanging device (34) is provided.

## Description

### BACKGROUND OF THE INVENTION

### Field of the Invention

This invention relates to a gas heat pump type air conditioning device in which a compression device for circulating a refrigerant is driven by a gas engine as a driving source, and the invention particularly relates to a gas heat pump type air conditioning device which can enhance heating capacity when outdoor air temperature is low.

### Description of Related Art

An air conditioning device which performs air conditioning such as air cooling and air heating by using a heat pump is provided with a refrigerant circuit including components such as an indoor heat exchanger, a compression device, an outdoor heat exchanger, and a throttling structure. Air cooling and heating indoors is realized by exchanging heat of indoor air and outdoor air by the indoor heat exchanger and the outdoor heat exchanger during the circulation of a refrigerant. Also, in this refrigerant circuit, the receipt of heat during air heating does not rely on only the outdoor heat exchanger, and a refrigerant heating device may sometimes by provided for directly heating the refrigerant.

Recently, regarding a driving source for the compression device which is provided in the above refrigerant circuit, a driving source employing a gas engine has been developed to replace electric motors which are commonly used. This air conditioning device employing a gas engine is generally called a gas heat pump type air conditioning device (hereinafter called a GHP). By this GHP, because municipal gas or the like, which are relatively inexpensive, can be used as fuel, the running cost is not increased because it is different from an electric heat pump provided with a compression device using electric motors (hereinafter called EHP), therefore cost can be reduced for consumers.

Also, in a GHP, outstanding air heating effects can be achieved if so-called waste heat such as high temperature exhaust gas exhausted from a gas engine or heat of engine-coolant-water is used as a heat source for the refrigerant during air heating operations, and more efficient use of energy is possible as compared with an EHP (electric heat pump). In addition, in this case, the efficiency percentage of energy use of the GHP is 1.2 to 1.5 times higher compared to an EHP. Also, apparatuses above, such as a refrigerant heating device, need not be installed in the refrigerant circuit if this kind of structure is used.

Additionally, in a GHP, defrosting operations necessary for the outdoor heat exchanging device in air heating can be performed by using the exhaust heat of the gas engine. Generally, the defrosting operation in an EHP is done in such a way that the air heating operation stops and the air cooling operation is temporarily performed to defrost the outdoor heat exchanging device. In this case, because cold air flows into the room, comfortableness inside the room is deteriorated. In contrast, in a GHP, continuous air heating operation is possible because of the above conditions, and problems occuring in the case of an EHP do not arise.

As mentioned above, in a GHP, the exhaust heat such as high temperature exhaust gas exhausted from gas engines or waste heat of engine-coolant-water is introduced to a heat exchanging device such as an exhausted gas heat exchanging device or water heat exchanging device during air heating operation; thus, collecting exhaust heat is possible by using such exhaust heat as a heat source for the refrigerant, and outstanding air heating capacity can be obtained differently from EHP.

In conventional GHPs, engine-coolant-water is heated by exhaust heat during the flowing of exhaust gas exhausted from the gas engine through an exhaust gas heat exchanging device; in addition, the engine-coolant-water absorbs heat while flowing inside a water jacket of the gas engine and cooling the water jacket of the gas engine; thus the temperature of the engine-coolant-water rises.

If such high temperature engine-coolant-water, which collected the exhaust heat from the gas engine, is sent to a water heat exchanging device, the refrigerant can be heated by heat of the engine-coolant-water; thus, the refrigerant can be evaporated sufficiently by cooperation between a water heat exchanging device and an outdoor heat exchanging device, even in an air heating operation when the outdoor air temperature is low.

However, there is a limit to the above improvement of the heating capacity achieved by collecting exhaust heat; thus, in other words, there is a limit to the amount of exhaust heat which is collectable; therefore, there has been a limit on the improvement of air heating capacity when the outdoor air temperature is low. In particular, in a case such as that above when a GHP is used in cold areas where the outdoor air temperatures are very low, the amount of heat absorbed from outdoor air in the outdoor heat exchanging device decreases extremely; thus, it is difficult to obtain necessary amounts of heat to sufficiently evaporate the refrigerant.

Accordingly, in order to enable a gas heat pump type air conditioning device to demonstrate sufficient air heating capacity even in an air heating operation in cold areas where outdoor air temperature may be below -15°C so as to provide a comfortable indoor environment, it is necessary to obtain sufficient amounts of heat to evaporate the refrigerant when the outdoor air temperature is low, and to improve the air heating capacity to be higher.

This invention was made in consideration of above conditions. Thus an object of this invention is to provide a gas heat pump type air conditioning device in which air heating capacity during low outdoor air temperatures can be improved to be higher. Also, an object of this invention is to provide a gas heat pump type air conditioning device which can exhibit sufficient air heating capacity even when the outdoor air temperature is low.

### SUMMARY OF THE INVENTION

In order to solve the above problems, the invention has the following construction.

In a gas heat pump type air conditioning device according to the first aspect of this invention, a refrigerating cycle is formed by circulating the refrigerant by a compression device for which the driving source is a gas engine, waste heat of exhaust gas exhausted from the gas engine is collected to engine coolant water by an exhaust gas heat exchanging device, and the refrigerant is heated by the engine-coolant-water in order to enhance the heating capacity, exhaust gas exhausted from the gas engine is heated, and a heating device which increases the amount of thermal energy collectable in the exhaust gas heat exchanging device.

According to such gas heat pump type air conditioning device, the exhaust gas exhausted from the gas engine is heated, and a heating device for increasing the amount of thermal energy which can be collected in the exhaust gas heat exchanging device is provided. Thus, the amount of absorbing heat of the engine coolant water in the exhaust gas heat exchanging device increases, and furthermore, the refrigerant is heated by high temperature engine coolant water to expedite the evaporation, and air heating capacity during low outdoor air temperature can be enhanced.

In the gas heat pump type air conditioning device according to the first aspect of the present invention, the heating device should preferably be a combusting device for heating exhaust gas which supplies combustion gas generated by combusting fuel by the combusting device to the exhaust gas; thus, the amount of thermal energy of exhaust gas can be increased easily and reliably.

In the gas heat pump type air conditioning device according to the second aspect of the present invention, the combusting device for heating exhaust gas should preferably be provided in the exhaust gas heat exchanging device, and the amount of absorbed heat of the engine coolant water in the exhaust gas heat exchanging device can be increased efficiently and directly.

In the gas heat pump type air conditioning device according to the second aspect of the present invention, it is preferable that a catalyst container which contains exhaust gas cleaning catalyst be provided in an exhaust system which connects the gas engine and the exhaust gas heat exchanging device, and that the combusting device of the exhaust gas heating device is provided inside the catalyst container. Thus, exhaust gas can be cleaned, and the amount of thermal energy of exhaust gas can be increased.

In the gas heat pump type air conditioning device according to the third aspect of the present invention, the heating device should preferably be operated when a outdoor air temperature detecting device detects a temperature lower than a predetermined value. The heating device is operated only under conditions that air heating capacity is insufficient, and total operating efficiency of the device can be enhanced.

In the gas heat pump type air conditioning device according to the fourth aspect of the present invention, the fuel to be combusted in the combusting device should be the same fuel as for driving the gas engine. Thus heating operation with inexpensive gas fuel is possible by using a fuel supply system similar to the gas engine.

In the combusting device for heating exhaust gas according to the fifth aspect of the present invention, a combusting device for heating exhaust gas is provided in a exhaust gas channel exhausted from a gas engine of a gas heat pump type air conditioning device so as to heat the exhaust gas, and the combusting device for heating exhaust gas is
characterized in comprising a hollow combusting device body, a combustion nozzle provided in the combusting device body, a fuel system for supplying fuel and air to the combustion nozzle in a predetermined ratio, a combustion gas supplying channel which supplies combustion gas generated by combusting the fuel with the combustion nozzle, from the combusting device body to exhaust gas exhausted from the gas engine of the gas heat pump type air conditioning device.

According to such a combusting device for heating exhaust gas, it is possible to generate high temperature combustion gas easily to supply such combustion gas to exhaust gas, and it is also possible to raise the temperature of the exhaust gas.

A combusting device for heating exhaust gas according to the sixth aspect of the present invention is provided in an exhaust gas channel exhausted from a gas engine of a gas heat pump type air conditioning device so as to heat the exhaust gas, and a combusting device for heating exhaust gas comprises a hollow combustion device body the casing of which is compatibly used by an exhaust gas heat exchanging device, a combustion nozzle provided in the combusting device body, a fuel supplying system which supplies fuel and air to the combustion nozzle in a predetermined ratio, the amount of heat of combustion gas generated in the combusting device body by combusting the fuel with the combustion nozzle being added to the amount of heat of exhaust gas which is exhausted from the gas engine of the gas heat pump type air conditioning device and passes through the combustion device body.

According to such a combustion device for heating exhaust gas, the amount of heat of the combustion gas generated in the exhaust gas heat exchanging device is equal to the amount of heat of exhaust gas directly, and it is possible to heat engine coolant water in the exhaust gas heat exchanging device efficiently.

A combustion device for heating exhaust gas according to the seventh aspect of the present invention is provided in an exhaust gas channel exhausted from a gas engine of a gas heat pump type air conditioning device so as to heat the exhaust gas, and this combustion device for heating exhaust gas comprises a hollow combustion device body a casing of which is compatibly used by a catalyst container which contains exhaust gas cleaning catalyst, a combustion nozzle provided in the combustion device body, a fuel supplying system which supplies fuel and air to the combustion nozzle in a predetermined ratio, the amount of heat of combustion gas generated by combusting the fuel with the combustion nozzle being added to the amount of heat of exhaust gas which is exhausted from the gas engine of the gas heat pump type air conditioning device and passes through the combustion device body.

According to such a combustion device for heating exhaust gas, it is possible to clean the exhaust gas of a gas engine and the fuel gas by the exhaust gas cleaning catalyst, and it is also possible for the amount of heat in combustion gas to be equal to an amount of heat of exhaust gas so as to raise the temperature of the exhaust gas. An additional advantage of raising the temperature of the exhaust gas is that the cleaning operation of the exhaust gas by the catalyst is expedited.

### BRIEF DESCRIPTION OF THE DRAWING

FIG. 1 shows the first embodiment of a gas heat pump type air conditioning device during air heating operation according to present invention.
FIG. 2 shows the first embodiment of a gas heat pump type air conditioning device during air cooling operation according to present invention.
FIG. 3 shows the construction of the second embodiment of a gas heat pump type air conditioning device of the present invention.
FIG. 4 shows the construction of the third embodiment of a gas heat pump type air conditioning device of the present invention.
FIG. 5 shows the construction of the fourth embodiment of a gas heat pump type air conditioning device of the present invention.

### DETAILED DESCRIPTION OF THE INVENTION

An embodiment of a gas heat pump type air conditioning device (hereinafter called a GHP) according to the present invention is explained with reference to drawings as follows.

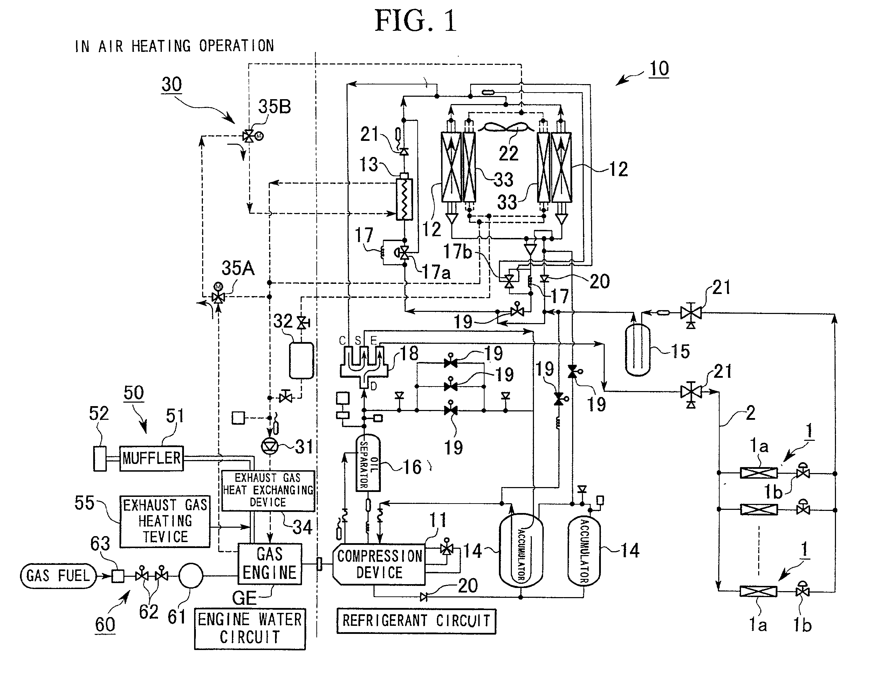

FIG. 1 is a system diagram showing an overall construction of an air heating system of a GHP as a first embodiment of the present invention. This drawing generally shows an indoor unit 1 and an outdoor unit 10 provided with device such as a compression device for driving the gas engine. In addition, one or a plurality of indoor unit 1 and outdoor unit 10 are connected by refrigerant pipe 2 in such a way that the refrigerant can circulate.

The indoor unit 1 is provided with an indoor heat exchanging device 1a which functions as an evaporator which evaporates the low temperature low pressure liquid refrigerant so as to remove heat from indoor air (indoor atmosphere) during air cooling operation and functions as a condenser which liquefies the high temperature high pressure gas refrigerant so as to heat the indoor air during air heating operation. In addition, a throttle structure 1b is provided for each indoor heat exchanging device 1a.

The outdoor unit 10 is internally divided into two major sections.

The first major section is a section forming a refrigerant circuit primarily by equipment such as a compression device and outdoor heat exchanging device together with the indoor unit 1, and the first major constructing section is called hereinafter the "refrigerant circuit section".

The second major section is a section provided with equipment such as a gas engine for driving the compression device together with auxiliary equipment, and the second major section is called hereinafter the "gas engine section".

In the refrigerant circuit section, equipment such as compression device 11, outdoor heat exchanging device 12, water heat exchanging device 13, accumulator 14, receiver 15, oil separator 16, throttling construction 17, 4-way valve 18, solenoid valve 19, check valve 20, and control valve 21 are provided.

A compression device 11 is operated by a gas engine GE as a driving source (which is to be described later), and the compression device 11 compresses the low temperature low pressure gas refrigerant taken from any one of indoor heat exchanging device 1a or outdoor heat exchanging device 12 and discharges it as high temperature high pressure gas refrigerant. By this construction, the refrigerant can radiate the heat to the outdoor air through the outdoor heat exchanging device 12 during air cooling operation, even if the outdoor air temperature is high. Also, the refrigerant can give heat to indoor air through the indoor heat exchanging device 12 during air heating operation.

The outdoor heat exchanging device 12 functions as a condenser which liquefies the high temperature high pressure gas refrigerant and radiates it to the outdoor air during the air cooling operation, and in contrast, the outdoor heat exchanging device 12 functions as an evaporator which evaporates the low temperature low pressure liquid refrigerant and removes heat from outdoor air during the air heating operation. That is, the outdoor heat exchanging device 12 performs a reverse operation to the above indoor heat exchanging device 1a during air cooling operation and air heating operation.

Also, the outdoor heat exchanging device 12 is provided in neighboring radiator 33 of the gas engine GE which is to be described later. The radiator 33 is a heat exchanging device which refrigerates the engine-coolant-water of the gas engine GE-by exchanging heat with the outdoor air.

The water heat exchanging device 13 provided in order that the refrigerant collect heat from the engine-coolant-water of the gas engine GE (which is to be mentioned later). That is, in the air heating operation, the refrigerant does not rely only on the exchange of heat in the indoor heat exchanging device 12, and it becomes possible to collect waste heat from the engine-coolant-water of the gas engine GE; thus, the effect of air heating operation can be enhanced.

Accumulator 14 is provided in order to store the liquid contained in the gas refrigerant flowing into the compression device 11.

Receiver 15 is provided in order to separate the refrigerant liquefied by the heat exchanging device which functions as a condenser into gas and liquid, and to store the surplus refrigerant as liquid in the refrigerating cycle.

Oil separator 16 is provided in order to separate oil contained in the refrigerant and to return the refrigerant back to the compression device 11.

Throttling construction 17 is provided in order to reduce the pressure of condensed high temperature high pressure liquid refrigerant and to expand the liquid refrigerant so as to produce low temperature low pressure liquid refrigerant. In an example in the drawing, a constant pressure expansion valve, thermostatic expansion valve, and capillary tube are selectively used as a throttling construction 17 according to the purpose.

4-way valve 18 is provided on the refrigerant pipe 2 in order to selectively change the channel of refrigerant and the direction of flow. On this 4-way valve 18, four ports such as D, C, S, and E are provided. Port D is connected to the discharging side of the compression device 11 by the refrigerant pipe 2. Port C is connected to the outdoor heat exchanging device 12 by the refrigerant pipe 2. Port S is connected to the absorbing side of the compression device 11 by the refrigerant pipe 2. Port E is connected to the indoor heat exchanging device 1a by the refrigerant pipe 2.

On the other hand, in the gas engine section, in the center of the gas engine, a coolant water system 30, exhaust gas system 50, a fuel absorbing system 60, and an engine oil system which is not shown in the drawing are provided.

The gas engine GE is connected to a compression device 11 which is provided in the refrigerant circuit by a shaft, a belt and the like; thus, the driving force is conducted from the gas engine GE to the compression device 11.

The coolant water system 30 is provided with a water pump 31, reservoir tank 32, a radiator 33 and the like. This coolant water system 30 chills the gas engine GE by the engine-coolant-water which circulates in the circuit shown by a dashed line organized by connecting these elements by pipes. A water pump 31 is provided for circulating the coolant water of the gas engine GE in the circuit. A reservoir tank 32 is provided for storing the surplus of the coolant water flowing in this circuit temporarily, and for supplying the surplus to the circuit in case the coolant water is in short supply. A radiator 33 is constructed integrally with an outdoor heat exchanging device 12. A radiator 33 is provided for radiating the heat which the engine-coolant-water removes from the gas engine GE to the outdoor air.

In the coolant water system 30, in addition to the above elements, an exhaust gas heat exchanging device 34 is provided. This exhaust gas heat exchanging device 34 is provided for collecting the heat of exhaust gas exhausted from the gas engine GE to the engine-coolant-water. Also, in the coolant water system 30, a water heat exchanging device 13 (which was mentioned hereinbefore) is disposed in such a way that the coolant water system 30 spans two systems such as the refrigerant circuit section and the coolant water system 30. Therefore the total construction of the coolant water system 30 is such that the engine-coolant-water not only removes heat from the gas engine GE but also collects heat from exhaust gas during air heating operation; thus, the collected heat is given to the refrigerant from the engine-coolant-water through the water heat exchanging device 13.

Additionally, flow control of engine-coolant-water in the coolant water system 30 is performed by flow control valves 35A and 35B provided in two places.

An exhaust gas system 50 is a system for releasing the exhaust gas of the gas engine GE to the atmosphere, and an exhaust gas system 50 is provided with a muffler 51 and a top of exhaust flue 52. In addition, exhaust gas exhausted from the gas engine GE passes through above exhaust gas heat exchanging device 34 and heats the engine coolant water; it is then released to the atmosphere from the top of exhaust flue 52.

A fuel absorbing system 60 is provided with a gas regulator 61, a gas solenoid valve 62, a gas connection port 63 and the like. This fuel absorbing system 60 is a system for supplying municipal gas such as liquefied natural gas (LNG) as gas fuel to the gas engine GE. A gas regulator 61 is provided for adjusting the delivery pressure of gas fuel which is supplied externally via a gas solenoid valve 62 and a gas connection port 63. The gas fuel for which the pressure is adjusted by this gas regulator 61 is supplied to a combustion chamber of the gas engine GE after being mixed with the air absorbed from the absorbing port (not shown in the drawing).

In the present invention, regarding the above GHP, an exhaust gas heating device 55 for heating exhaust gas exhausted from the gas engine and for increasing the quantity of thermal energy collectable in the exhaust gas heat exchanging device 34 is provided in exhaust gas system 50 which connects the gas engine GE and the exhaust gas heat exchanging device 34.

This exhaust gas heating device 55 increases the quantity of thermal energy which is retained by further heating high temperature exhaust gas exhausted from the gas engine GE with another heating source, or by adding (mixing) high temperature combustion gas retaining large quantity of thermal energy.

In the following paragraphs, regarding the GHP, the operating method of air cooling and air heating for the indoor environment is explained by describing the flow of the refrigerant and the engine-coolant-water.

First, the operating method of the air heating operation is explained with reference to FIG. 1. Regarding the description of the valves, if a valve in the drawing is filled in black, the valve is open. The direction of the flow of the refrigerant and the engine-coolant-water are shown by arrows.

In this case, in a 4-way valve 18 of the refrigerant circuit, the interval between the port D and the port E, and the interval between the port C and the port S are connected. The discharging side of the compression device 11 is connected to the indoor heat exchanging device 1a. In such a condition, high temperature high pressure gas refrigerant discharged from the compression device 11 is sent to the indoor heat exchanging device 1a through the 4-way valve 18 and the operating valve 21.

High temperature high pressure gas refrigerant exchanges heat with the indoor air in the indoor heat exchanging device 1a to be liquefied. In this process, the gas refrigerant radiates heat to heat the indoor air, and after that, the gas refrigerant becomes high temperature high pressure liquid refrigerant. This liquid refrigerant flows passing a throttling construction 1b, an operating valve 21 and a receiver 15, consequently this liquid refrigerant is separated into gas and liquid content.

The liquid refrigerant discharged from the receiver 15 is introduced to the refrigerant pipe 2 to be divided, either portion of which is sent to the water heat exchanging device 13 via the throttling construction 17a of the constant pressure expansion valve. The other liquid refrigerant is sent to the outdoor heat exchanging device 12 through the solenoid valve 18 which is made to open and the throttling construction 17b of the thermal expansion valve.

The pressure of liquid refrigerant sent to the water heat exchanging device 13 is reduced by passing through the throttling construction 17a; thus, the liquid refrigerant becomes low temperature low pressure refrigerant. In the water heat exchanging device 13, low temperature low pressure liquid refrigerant is evaporated by absorbing heat from the engine-coolant-water, thus becoming low temperature low pressure gas refrigerant.

In addition, regarding the water heat exchanging device 13 and the outdoor heat exchanging device 12 for evaporating the liquid refrigerant, either one can be chosen favorably according to the operating conditions such as outdoor air temperature. Also combined use is possible according to the construction of the device.

Such a refrigerant which becomes low temperature low pressure gas is introduced to the accumulator 14 from the port C of 4-way valve 18 via the port S, the gas and liquid content of the refrigerant is separated and are then taken into the compression device 11. The gas refrigerant taken into the compression device 11 is compressed by the operation of the compression device 11 to become high temperature high pressure gas refrigerant, and is sent to the indoor heat exchanging device 1a again; thus, the refrigerating cycle in which the refrigerant repeatedly changes state can be formed.

In case it is not possible to absorb sufficient heat from the outdoor air due to particularly low outdoor air temperature during such an air heating operation, the exhaust gas heating device 55 is operated to increase the quantity of thermal energy of exhaust gas exhausted from the gas engine GE. As a result, the quantity of thermal energy for heating the engine coolant water in the exhaust gas heat exchanging device 34 increases; thus, the temperature of the engine coolant water can be higher; in other words, the engine coolant water retaining a larger quantity of thermal energy can be supplied to the water heat exchanging device 13.

By doing it in this way, low temperature low pressure liquid refrigerant can be evaporated by receiving more thermal energy from the engine-coolant-water in the water heat exchanging device 13. Therefore, for example, even in cold areas where the outdoor air temperature may be below -15°C, a sufficient amount of heat can be obtained without relying on the heat to be absorbed from the outdoor air. That is, even if it is impossible to absorb heat from outdoor air, it is possible to obtain a sufficient amount of heat for the heating operation to enable the refrigerating cycle to properly function and to demonstrate the heating capacity satisfactorily.

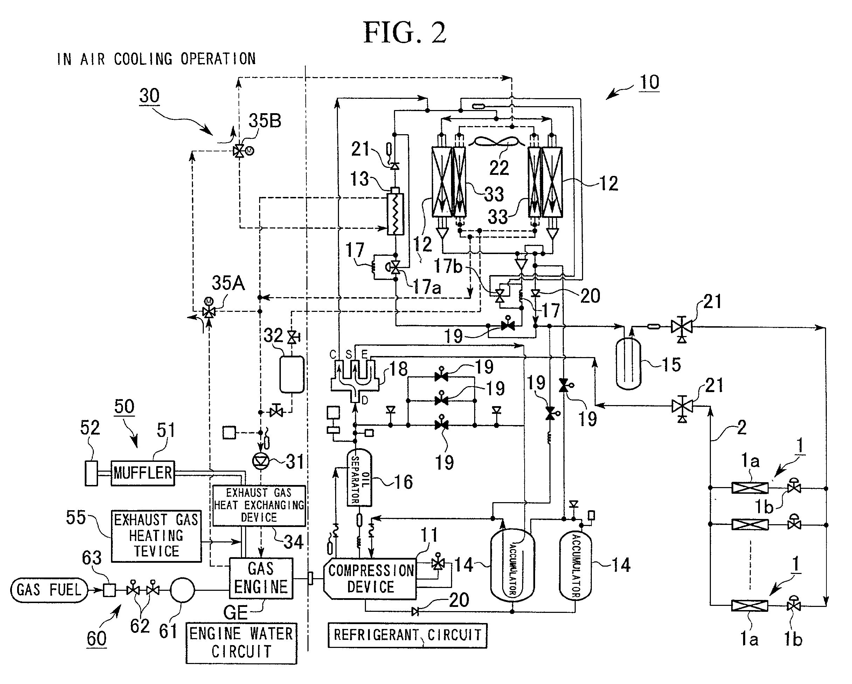

Next, the flow of the refrigerant and the engine-coolant-water in air cooling operation is explained briefly with reference to the FIG. 2.

In this case, in a 4-way valve 18, spaces are connected between the port D and the port C, and between the port E and the port S. The discharging side of the compression device 11 is connected to the outdoor heat exchanging device 12. In this condition, the high temperature high pressure gas refrigerant discharged from the compression device 11 is sent to the indoor heat exchanging device 12 which functions as a condenser through the 4-way valve 18.

The high temperature high pressure gas refrigerant is evaporated in the outdoor heat exchanging device 12 to discharge heat to outdoor air; thus, the refrigerant becomes high temperature high pressure liquid refrigerant. This liquid refrigerant is introduced to the receiver 15 through the check valve 20. The liquid refrigerant separated into gas and liquid components in the receiver 15 is introduced to the throttling construction 1b through the operating valve 21; then the pressure is reduced in the process of passing through the throttling construction 1b resulting in low temperature low pressure liquid refrigerant, then the liquid refrigerant is sent to the indoor heat exchanging device 1a which functions as an evaporator.

The low temperature low pressure liquid refrigerant sent to the indoor heat exchanging device 1 a removes heat from the indoor air and is evaporated. In this process, this refrigerant chills the indoor air and becomes low temperature low pressure gas refrigerant, and is introduced to the 4-way valve 18 through the operating valve 21 and the refrigerant pipe 2.

The low temperature low pressure gas refrigerant introduced to the 4-way valve 18 flows into the accumulator 14 from the port E via the port S. After the liquid content is separated here, the gas refrigerant is absorbed in the compression device 11. The gas refrigerant absorbed by the compression device 11 is compressed by the operation of the compression device and becomes high temperature high pressure gas refrigerant to be sent to the outdoor heat exchanging device 12; thus, the refrigerating cycle where the refrigerant repeatedly changes state can be formed.

Additionally, in air cooling operations, the above exhaust gas heating device 55 is stopped.

The first embodiment of above exhaust gas heating device is explained with reference to the drawings as follows. The drawings used in the explanation a feature of the construction by enlarging a part of FIG. 1.

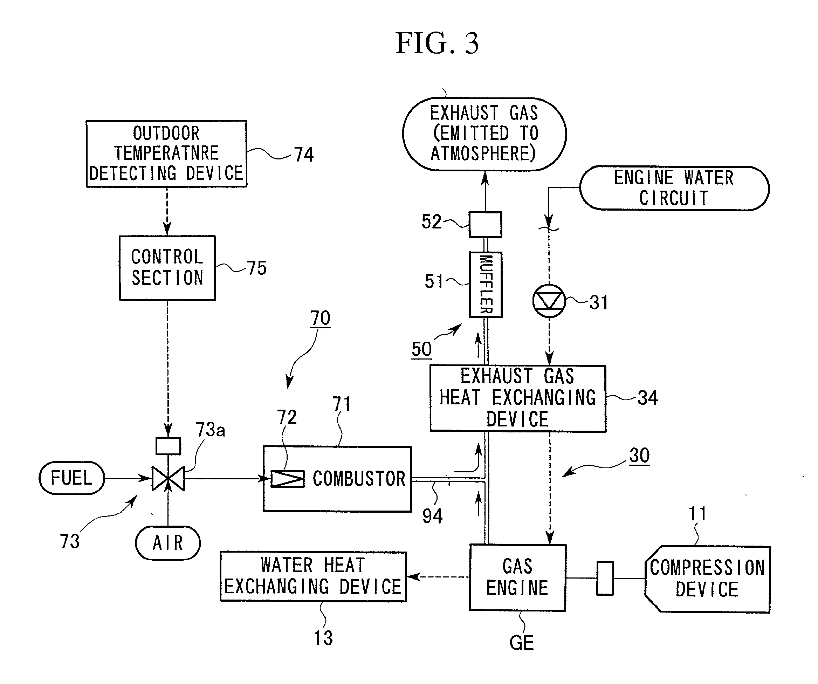

In the second embodiment shown in FIG. 3, a combustion device for heating exhaust gas 70 is provided as a exhaust gas heating device exhausted from the gas engine GE and for increasing quantity of thermal energy collectable in the exhaust gas heat exchanging device 34.

This combustion device for heating exhaust gas 70 comprises a hollow combusting device body 71, a combustion nozzle 72 provided in the combusting device body 71, a fuel supplying system 73 which supplies fuel and air to the combustion nozzle in a predetermined mixture ratio, a combustion gas supplying channel 94 which supplies combustion gas generated by combusting the fuel with the combustion nozzle 72, from the combustor 71 to exhaust gas exhausted from the gas engine GE.

That is, in the combustion device for heating exhaust gas 70, combustion gas generated by combusting fuel in the combustor 71 is mixed with the exhaust gas exhausted from the gas engine GE of the gas heat pump type air conditioning device via combustion gas supplying channel 94 so as to be supplied to the exhaust gas system 50.

In the embodiment shown in the drawing, although the combustion gas supplying channel 94 joins to a piping of the exhaust system 50 between the gas engine GE and the exhaust gas heat exchanging device 34, the combustion gas may be supplied directly inside the exhaust gas heat exchanging device 34.

In the fuel supplying system 73, a control valve 73a is provided, air-fuel mixture in which fuel and air are mixed in appropriate ratio is supplied to the combustion nozzle 72 via this control valve 73a. The control valve 73a opens when a combustion device for heating exhaust gas 70 operates, in other words, when an outdoor air temperature detecting device 74 detects a temperature lower than a predetermined value during air heating operation and a control signal output from the control section 75 is received. As an outdoor air temperature detecting device 74, a temperature sensor which can be provided in an appropriate place near the outdoor unit. Also, as other types of an outdoor air temperature detecting device. Also, the condition of outdoor air can be determined depending on the condition of the refrigerant such as temperature and pressure detected by various sensors which are provided in the channel for circulating the refrigerant.

When a detecting signal indicating a low outdoor temperature is input to the control section 75, the control section 75 opens the control valve 73a to supply fuel and air to the combustion nozzle 72, and the air-fuel mixture is ignited in the combustion nozzle 72.

When the air-fuel mixture is combusted, high temperature combustion gas is generated to be supplied to the exhaust system 50; thus, the thermal energy retained in the combustion gas is added to the exhaust gas. Because of this, the amount of heat which can be absorbed in the engine coolant water in the exhaust gas heat exchanging device increases, and the engine coolant water is more highly heated and can be supplied to the water heat exchanging device 13. Accordingly, the amount of heat for heating the refrigerant in the water heat exchanging device 13 increases, and it is possible to evaporate low temperature low pressure refrigerant even during low outdoor air temperature and to supply the refrigerant to the refrigerating cycle.

The fuel to be used in above combusting device for heating exhaust gas 70 should preferably be the gas fuel such as municipal gas which is used similarly as gas engine GE. This is because the gas engine GE and the fuel system can used compatibly, and additionally the cost of the fuel is low.

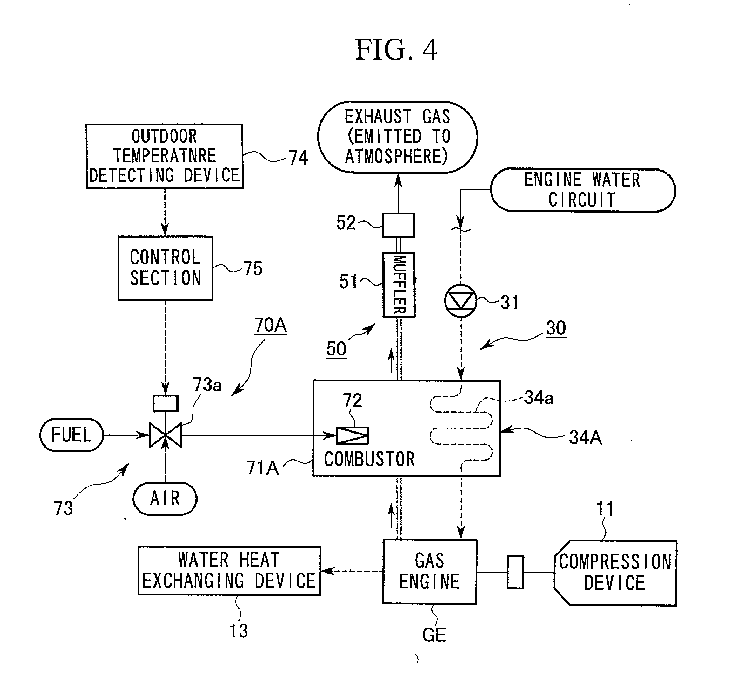

In the third embodiment as shown in the FIG. 4, the combustion nozzle 72 of the combusting device for heating exhaust gas 70A is provided inside the hollow combustion device body 71A which can be compatible with the exhaust gas heat exchanging device 34A and the casing. Other factors are similar to the second embodiment as shown in FIG. 3, and the same reference numerals are used and detailed explanation is omitted.

In this combustion device for heating exhaust gas 70A which is constructed in such a way, the amount of heat of the combustion gas generated inside the combustion device body 71A is directly added to the exhaust gas passing through the exhaust gas heat exchanging device 34A by combusting the air-fuel mixture in the combustion nozzle 72. By doing this, the engine coolant water flowing through the group of pipes 34a can be heated highly efficiently with no thermal loss, and also, it can be expected that exhaust gas and engine coolant water are heated by radiated heat from the flame.

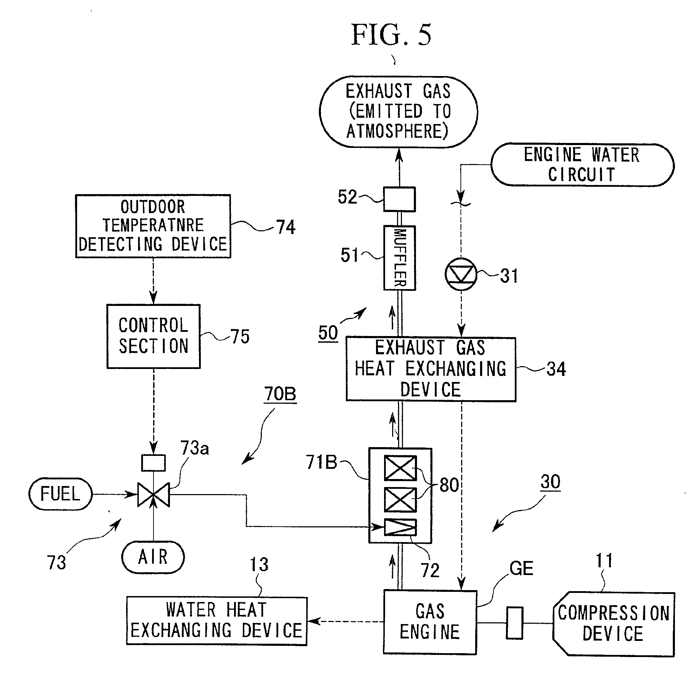

In the fourth embodiment shown in FIG. 5, the combustion nozzle 72 of the combustion device for heating exhaust gas 70B is provided in hollow combusting device body 71B which is compatible with the catalyst container which contains the exhaust gas cleaning catalyst 80. Other factors are similar to the third embodiment as shown in FIG. 3, and the same reference numerals are used and detailed explanation is omitted.

The combusting device for heating exhaust gas 70B containing the exhaust gas cleaning catalyst 80 is provided in the exhaust system 50 to be located between the gas engine and the exhaust gas heat exchanging device 34. As an exhaust gas cleaning catalyst 80, for example, a rhodium catalytic converter is preferably used. By constructing it in this way, it is possible to increase the heat for heating the engine coolant water at the same time as cleaning the exhaust gas of gas engine GE and the exhaust gas.

Also, it is known that the cleaning of exhaust gas by the exhaust gas cleaning catalyst 80 can be done more efficiently under conditions in which the exhaust gas is at a high temperature; therefore, raising the temperature of the exhaust gas by adding combustion gas can also lead to the promotion of clearing the combustion gas by the catalyst.

As explained above, the exhaust gas heating device 55 which can heat the exhaust gas according to necessity during air heating operation is provided; thus, more heat is added to the waste heat of the engine, and therefore it is possible to supply more thermal energy to exhaust gas heat exchanging device 34 and the engine coolant water can be heated to higher temperatures than conventionally.

Because of this, even in cold areas where outdoor air temperature may be quite low, the refrigerant can be evaporated in the water heat exchanging device 13 by exchanging heat with high temperature engine coolant water retaining large amounts of thermal energy. Accordingly, the refrigerating cycle can be maintained by using heat supplied from the waste heat of the engine and the exhaust gas heating device 55 even during periods of low outdoor air temperature in which sufficient amounts of heat necessary to evaporate the refrigerant in outdoor heat exchanging device 12 cannot be obtained from outdoor air; thus, sufficient air heating operating capacity is obtained, and air heating capacity can be enhanced even during periods of low outdoor air temperature.

The construction of present invention is not limited to above embodiment, and for example, factors such as the number or variations of devices relating to the refrigerating cycle can be preferably changed within the scope of the features of present invention.

## Claims

1. A gas heat pump type air conditioning device comprising:
a compression device (11) having a gas engine as a driving source and forming a refrigerating cycle by circulating a refrigerant;
an exhaust gas heat exchanging device (34) which collects waste heat exhausted from the gas engine and returns the heat back to engine-coolant-water; and
a heating device (70 ; 70A ; 70B) which heats exhaust gas exhausted from the gas engine so as to increase an amount of thermal energy collectible in the exhaust gas heat exchanging device (34);
wherein the refrigerant is heated by the engine-coolant-water to enhance air heating capacity.

2. A gas heat pump type air conditioning device according to claim 1, wherein the heating device (70 ; 70A ; 70B) is a combusting device for heating exhaust gas (70) which supplies combustion gas generated by combusting fuel in a combustor (71 ; 71A ; 71B) to the exhaust gas.

3. A gas heat pump type air conditioning device according to claim 2, wherein the combustor (71A) of the combusting device for heating exhaust gas (70A) is provided in the exhaust gas heat exchanging device (34A).

4. A gas heat pump type air conditioning device according to claim 2, wherein a catalyst container which contains exhaust gas cleaning catalyst (80) is provided in an exhaust system (50) which connects the gas engine and the exhaust gas heat exchanging device (34), and the combustor (71B) for heating exhaust gas (70B) is provided in the catalyst container.

5. A gas heat pump type air conditioning device according to claims 1 to 4, wherein the heating device (71 ; 71A ; 71B) is operated when a outdoor air temperature detecting device (74) detects a temperature lower than a predetermined value.

6. A gas heat pump type air conditioning device according to claims 2 to 5, wherein the fuel to be combusted in the combustor (71 ; 71A ; 71B) is the same fuel for driving the gas engine.

7. A combusting device for heating exhaust gas (70) provided in a channel of exhaust gas exhausted from a gas engine of a gas heat pump type air conditioning device of anyone of claims 1 to 6 so as to heat the exhaust gas comprising:
a hollow combustor (71);
a combustion nozzle (72) provided in the combustor (71);
a fuel system (73) for supplying fuel and air to the combustion nozzle (72) in a predetermined ratio;
a combustion gas supplying channel (94) which supplies combustion gas generated by combusting the fuel with the combustion nozzle (72), from the combustor (71) to exhaust gas exhausted from the gas engine of the gas heat pump type air conditioning device.

8. A combustion device for heating exhaust gas (70A) provided in a channel of exhaust gas exhausted from a gas engine of a gas heat pump type air conditioning device of anyone of claims 1 to 6 so as to heat the exhaust gas comprising:
a combustor (71A) a hollow casing of which is compatibly used by an exhaust gas heat exchanging device (34A);
a combustion nozzle (72) provided in the combustor (71A);
a fuel supplying system (73) which supplies fuel and air to the combustion nozzle (72) by a predetermined ratio,
wherein amount of heat of combustion gas generated in the combustor (71A) by combusting the fuel with the combustion nozzle (72) is added to amount of heat of exhaust gas which is exhausted from the gas engine (GE) of the gas heat pump type air conditioning device and passes through the combustor (71A).

9. A combusting device for heating exhaust gas (70B) provided in a channel of exhaust gas exhausted from a gas engine of a gas heat pump type air conditioning device of anyone of claims 1 to 6 so as to heat the exhaust gas comprising:
a combustor (71B) which is compatibly a catalyst container which contains exhaust gas cleaning catalyst (80);
a combustion nozzle (72) provided in the combustor (71B);
a fuel supplying system (73) which supplies fuel and air to the combustion nozzle (72) by a predetermined ratio,
wherein an amount of heat of combustion gas generated in the combustor (71B) by combusting the fuel with the combustion nozzle (72) is added to amount of heat of exhaust gas which is exhausted from the gas engine of the gas heat pump type air conditioning device and passes through the combustor (71B).
